# EUROPEAN PATENT APPLICATION

(11) **EP 4 432 065 A1**
(43) Date of publication of application: **18.09.2024**
(21) Application number: 22906344.1
(22) Date of filing: 06.12.2022
(51) Int. Cl.: G06F 3/04845, G06F 40/30

(54) **INTENT LEGITIMACY CHECKING METHOD AND APPARATUS**

(30) Priority: 17.12.2021 CN 202111548435
(71) Applicant: Huawei Technologies Co., Ltd., Shenzhen, Guangdong 518129 (CN)
(72) Inventor: LI, Yexing, Shenzhen, Guangdong 518129 (CN); LI, Xianming, Shenzhen, Guangdong 518129 (CN)
(74) Representative: Pfenning, Meinig & Partner mbB
(86) International application number: PCT/CN2022/137016
(87) International publication number: WO 2023/109594

(57) **Abstract**

A method and an apparatus for checking intent validity are provided to resolve a problem in a conventional technology that an intent consumer cannot properly modify an intent expression because the intent consumer cannot learn a cause of a failure in creation of an intent instance. In this application, the method includes: A first device receives a first intent expression from a second device, where the first intent expression is used to create an intent instance; and the first device sends failure information to the second device based on the first intent expression, where the failure information is used to indicate a cause of a failure in creation of the intent instance, the first intent expression includes a plurality of attributes, the cause of the failure includes that there are conflicting attributes in the first intent expression, and the attribute is a target or a constraint condition.

## Description

### CROSS-REFERENCE TO RELATED APPLICATIONS

This application claims priority to Chinese Patent Application No. 202111548435.6, filed with the China National Intellectual Property Administration on December 17, 2021 and entitled "METHOD AND APPARATUS FOR CHECKING INTENT VALIDITY", which is incorporated herein by reference in its entirety.

### TECHNICAL FIELD

This application relates to the field of communication technologies, and in particular, to a method and an apparatus for checking intent validity.

### BACKGROUND

Currently, a service and system aspect work group 5 (service and system aspect work group 5, SA5) of the 3rd Generation Partnership Project (the 3rd generation partnership project, 3GPP) uses a manner of full-scale modeling of network resources and full-scale management of network objects in terms of a definition of a conventional northbound interface (itf-N). A network management system (network management system, NMS) directly creates, reads, updates, and deletes all southbound management objects by using operations of types such as configuration management (configuration management, CM), performance management (performance management, PM), and fault management (fault management, FM).

Further, to reduce management complexity of a network infrastructure and improve operation and maintenance efficiency in a multi-vendor (Multi-vendor) scenario, the 3GPP SA5 starts researches on an intent-driven management service (intent driven management service, IDMS): As an intent consumer, the NMS retains only an intent model, and transfers only an intent expression on a northbound interface. In this way, differentiated details in terms of implementation of device manufacturers are shielded. An intent is expressed in a declarative manner, and operation and maintenance personnel only need to declare, by using the intent expression, effect to be achieved, and do not need to determine how to achieve the effect. This helps lower an operation and maintenance threshold. After receiving the intent expression, an intent producer, that is, an equipment management system (equipment management system, EMS), needs to create an intent instance based on the intent expression. Specifically, the EMS may translate, based on a network status, the intent expression into a requirement on a network and a specific execution operation, and execute the requirement and the specific execution operation to achieve the intent.

In this process, the EMS may fail to create the intent instance. Therefore, the EMS notifies the NMS that creation of the intent instance fails. However, the NMS does not know a cause of the current creation failure. Consequently, the NMS cannot properly modify the intent expression based on the cause of the failure.

### SUMMARY

This application provides a method and an apparatus for checking intent validity, to resolve a problem in a conventional technology that an intent consumer cannot properly modify an intent expression because the intent consumer cannot learn a cause of a failure in creation of an intent instance.

According to a first aspect, this application provides a method for checking intent validity. The method may be performed by a first device, the first device may be an intent producer, and the intent producer may be specifically an EMS, an IDMS producer, or a management service producer (management service producer, MnS producer).

In a possible implementation, the method includes: The first device receives a first intent expression from a second device, where the first intent expression is used to create an intent instance; and the first device sends failure information to the second device based on the first intent expression, where the failure information is used to indicate a cause of a failure in creation of the intent instance, the first intent expression includes a plurality of attributes, the cause of the failure includes that there are conflicting attributes in the first intent expression, and the attribute is a target or a constraint condition.

In the foregoing technical solution, the first device may send the failure information to the second device based on the first intent expression, to notify the second device of a reason why the first intent expression cannot be used to successfully create the intent instance. In this way, this helps the second device send, to the first device, an intent expression that can be used to successfully create the intent instance, thereby improving a success rate of creating an intent.

In a possible implementation, that the first device sends the failure information to the second device based on the first intent expression includes: The first device performs a validity check on the first intent expression; and after determining that the first intent expression fails to pass the validity check, the first device generates the failure information based on a reason why the first intent expression fails to pass the validity check.

In the foregoing technical solution, the first device may perform the validity check on the first intent expression, and when determining that the first intent expression fails to pass the validity check, the first device does not need to create the intent instance based on the first intent expression, thereby helping prevent the first device from performing an unnecessary operation. In addition, the first device may further generate the failure information based on the reason why the first intent expression fails to pass the validity check, thereby helping notify the second device of a reason why the intent instance cannot be successfully created.

In a possible implementation, the cause of the failure includes that there are a first attribute and a second attribute that conflict with each other in the first intent expression, the first attribute includes a first attribute name and a first attribute range, and the second attribute includes a second attribute name and a second attribute range; and a type of the conflict includes one or more of the following: a syntax conflict, used to indicate that the first attribute name is the same as the second attribute name and an intersection set of the first attribute range and the second attribute range is empty; an operation conflict, used to indicate that an operation indicated by the first attribute name and the first attribute range is mutually exclusive with an operation indicated by the second attribute name and the second attribute range, where for example, if an operation 1 is "turn on a symbol off switch", and an operation 2 is "turn off a symbol off switch", the operation 1 and the operation 2 are mutually exclusive; or an effect conflict, used to indicate that when the operation indicated by the first attribute name and the first attribute range and the operation indicated by the second attribute name and the second attribute range are simultaneously performed, effect achieved by the two operations is mutually exclusive, where for example, "turn on a symbol off switch" can save energy but reduce a throughput rate of a network.

In a possible implementation, the failure information includes the first attribute, the second attribute, and the type of the conflict between the first attribute and the second attribute.

In the foregoing technical solution, the type of the conflict may be the syntax conflict, the operation conflict, or the effect conflict. The first device may determine, from the first intent expression based on the three types of conflicts, the first attribute and the second attribute that conflict with each other, thereby helping improve accuracy of identifying conflicting attributes. Further, the first device notifies the second device of this attribute conflict by using the failure information, so that the second device can obtain, based on the failure information, a reason why the first intent expression cannot be used to successfully create the intent instance, and therefore the intent expression is modified in a targeted manner, thereby helping improve a success rate of creating an intent.

In a possible implementation, the cause of the failure further includes that a third attribute in the first intent expression does not accord with an intent template in the first device; the intent template includes a plurality of template attribute names and template attribute ranges respectively corresponding to the plurality of template attribute names; the third attribute includes a third attribute name and a third attribute range; and that the third attribute in the first intent expression does not accord with the intent template in the first device includes: the third attribute name is not included in the plurality of template attribute names in the intent template; or the third attribute range exceeds a template attribute range that is in the intent template and that is corresponding to the third attribute.

In a possible implementation, the failure information further includes the third attribute.

In the foregoing technical solution, the first device may determine the third attribute that is included in the first intent expression and that does not accord with the intent template, and notify the second device of the third attribute by using the failure information, thereby helping improve a success rate of creating an intent.

In a possible implementation, the method further includes: The first device sends a recommended intent expression to the second device based on the first intent expression; and after determining that the second device accepts the recommended intent expression, the first device creates the intent instance based on the recommended intent expression.

In the foregoing technical solution, the first device may further send the recommended intent expression to the second device, to recommend, to the second device, an intent expression that can pass the validity check, and when the second device accepts the recommended intent expression, the first device may create the intent instance based on the recommended intent expression, thereby helping improve efficiency and a success rate of creating the intent instance.

In a possible implementation, the method further includes: The first device receives a second intent expression from the second device, where the second intent expression is obtained after the second device modifies the first intent expression based on the cause of the failure.

In the foregoing technical solution, the first device may further receive the second intent expression obtained after the second device modifies the first intent expression based on the failure information, so that the first device can further perform a validity check on the second intent expression. In this way, a success rate of passing the validity check by the intent expression can be improved. In addition, the second device may choose whether to use the recommended intent expression, thereby improving flexibility of creating the intent instance.

In a possible implementation, the first intent expression is included in an intent create request, the failure information is included in an intent create response, and the second intent expression is included in an intent modify request or an intent create request. In a possible implementation, the intent create request further includes a check indication, and the check indication is used to indicate the first device to perform the validity check on the first intent expression. In the foregoing technical solution, the check indication is added to the intent create request, and the check indication may be used to indicate the first device to perform the validity check on the first intent expression in the intent create request.

In a possible implementation, the first intent expression is included in an intent validity check request, and the failure information is included in an intent validity check response. The second intent expression is included in the intent validity check request or the intent create request. In the foregoing technical solution, the first device may receive the intent validity check request from the second device, and the intent validity check request may be used to indicate the first device to perform the validity check on the first intent expression in the intent validity check request.

In a possible implementation, the failure information includes one or more of the following: conflicting attributes, a type of a conflict between conflicting attributes, or an attribute whose attribute name and/or attribute range are/is not included in the intent template. In the foregoing technical solution, the failure information is used to indicate the cause of the failure in creation of the intent instance, so that the second device can be indicated to modify the first intent expression based on the failure information, thereby helping the first device receive the second intent expression that meets the validity check, and improving a success rate of creating the intent instance.

According to a second aspect, this application provides a method for checking intent validity. The method may be performed by a second device, the second device may be an intent consumer, and the intent consumer may be specifically an NMS, an IDMS consumer, or a management service consumer (management service consumer, MnS consumer).

In a possible implementation, the method includes: The second device sends a first intent expression to a first device, where the first intent expression is used to create an intent instance; and the second device receives failure information from the second device, where the failure information is used to indicate a cause of a failure in creation of the intent instance, the first intent expression includes a plurality of attributes, the cause of the failure includes that there are conflicting attributes in the first intent expression, and the attribute is a target or a constraint condition.

In a possible implementation, the cause of the failure includes that there are a first attribute and a second attribute that conflict with each other in the first intent expression, the first attribute includes a first attribute name and a first attribute range, and the second attribute includes a second attribute name and a second attribute range; and a type of the conflict includes one or more of the following: a syntax conflict, used to indicate that the first attribute name is the same as the second attribute name and an intersection set of the first attribute range and the second attribute range is empty; an operation conflict, used to indicate that an operation indicated by the first attribute name and the first attribute range is mutually exclusive with an operation indicated by the second attribute name and the second attribute range; or an effect conflict, used to indicate that when the operation indicated by the first attribute name and the first attribute range and the operation indicated by the second attribute name and the second attribute range are simultaneously performed, effect achieved by the two operations is mutually exclusive.

In a possible implementation, the failure information includes the first attribute, the second attribute, and the type of the conflict between the first attribute and the second attribute.

In a possible implementation, the cause of the failure further includes that a third attribute in the first intent expression does not accord with an intent template in the first device; the intent template includes a plurality of template attribute names and template attribute ranges respectively corresponding to the plurality of template attribute names; the third attribute includes a third attribute name and a third attribute range; and that the third attribute in the first intent expression does not accord with the intent template in the first device includes: the third attribute name is not included in the plurality of template attribute names in the intent template; or the third attribute range exceeds a template attribute range that is in the intent template and that is corresponding to the third attribute.

In a possible implementation, the failure information further includes the third attribute.

In a possible implementation, the method further includes: The second device receives a recommended intent expression from the first device; and the second device sends an indication of accepting the recommended intent expression to the first device, where the recommended intent expression is used to create the intent instance.

In a possible implementation, the method further includes: The second device modifies the first intent expression based on the cause of the failure to obtain a second intent expression, and sends the second intent expression to the first device.

In a possible implementation, the first intent expression is included in an intent create request, the failure information is included in an intent create response, and the second intent expression is included in an intent modify request.

In a possible implementation, the intent create request further includes a check indication, and the check indication is used to indicate the first device to perform a validity check on the first intent expression.

In a possible implementation, the first intent expression is included in an intent validity check request, the failure information is included in an intent validity check response, and the second intent expression is included in an intent create request.

In a possible implementation, the failure information includes one or more of the following: conflicting attributes, a type of a conflict between conflicting attributes, or an attribute whose attribute name and/or attribute range are/is not included in the intent template.

According to a third aspect, an embodiment of this application provides a communication apparatus. The apparatus has a function of implementing the first device in the first aspect or any possible implementation of the first aspect. The first device may be an intent producer, and the apparatus may be the first device or a chip in the first device. The communication apparatus may alternatively have a function of implementing the second device in the second aspect or any possible implementation of the second aspect. The second device may be an intent consumer, and the apparatus may be the second device or a chip in the second device.

Functions of the foregoing communication apparatus may be implemented by hardware, or may be implemented by hardware executing corresponding software. The hardware or the software includes one or more modules, units, or means (means) corresponding to the foregoing functions.

In a possible implementation, a structure of the apparatus includes a processing module and a transceiver module. The processing module is configured to support the apparatus in performing a corresponding function of the first device in the first aspect or any implementation of the first aspect, or performing a corresponding function of the second device in the second aspect or any implementation of the second aspect. The transceiver module is configured to support communication between the apparatus and another communication device. For example, when the apparatus is the first device, the apparatus may receive a first intent expression from the second device. The communication apparatus may further include a storage module. The storage module is coupled to the processing module, and stores program instructions and data that are necessary for the apparatus. For example, the processing module may be a processor, the communication module may be a transceiver, the storage module may be a memory, and the memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, so that the apparatus is enabled to perform the method according to the first aspect or any possible implementation of the first aspect, or the method in the second aspect or any possible implementation of the second aspect. Optionally, the apparatus further includes a communication interface, and the processor is coupled to the communication interface. When the apparatus is the second device or the first device, the communication interface may be a transceiver or an input/output interface. When the apparatus is the chip included in the second device or the chip included in the first device, the communication interface may be an input/output interface of the chip. Optionally, the transceiver may be a transceiver circuit, and the input/output interface may be an input/output circuit.

According to a fourth aspect, an embodiment of this application provides a chip system, including a processor and a memory. The processor is coupled to the memory, the memory is configured to store a program or instructions, and when the program or the instructions are executed by the processor, the chip system is enabled to implement the method in the first aspect or any possible implementation of the first aspect, or implement the method in the second aspect or any possible implementation of the second aspect.

Optionally, the chip system further includes an interface circuit, and the interface circuit is configured to exchange code or instructions with the processor.

Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be disposed on different chips respectively.

According to a fifth aspect, an embodiment of this application provides a communication apparatus, including a processor. The processor is connected to a memory, the memory is configured to store a computer program, and the processor is configured to execute the computer program stored in the memory, to enable the apparatus to implement the method in the first aspect or any possible implementation of the first aspect, or the method in the second aspect or any possible implementation of the second aspect.

According to a sixth aspect, an embodiment of this application provides a computer-readable storage medium. The computer-readable storage medium stores a computer program or instructions. When the computer program or the instructions are executed by a communication apparatus, the method in the first aspect or any possible implementation of the first aspect is implemented, or the method in the second aspect or any possible implementation of the second aspect is implemented.

According to a seventh aspect, an embodiment of this application provides a computer program product. The computer program product includes a computer program or instructions. When the computer program or the instructions are executed by a communication apparatus, the method in the first aspect or any possible implementation of the first aspect is implemented, or the method in the second aspect or any possible implementation of the second aspect is implemented.

According to an eighth aspect, this application provides a communication system. The communication system includes a first device and a second device. The first device may be configured to perform the method in the first aspect or any possible implementation of the first aspect, and the second device may be configured to perform the method in the second aspect or any possible implementation of the second aspect.

For technical effect that can be achieved in any one of the second aspect to the eighth aspect, refer to the descriptions of beneficial effect in the first aspect. Details are not described herein again.

### BRIEF DESCRIPTION OF DRAWINGS

FIG. 1 is a diagram of an architecture of a communication system according to this application;
FIG. 2 is a diagram of an intent creation procedure according to this application;
FIG. 3 is a schematic flowchart of a method for checking intent validity according to this application;
FIG. 4 is a flowchart of a method for checking intent validity in a first specific scenario according to this application;
FIG. 5 is a flowchart of a method for checking intent validity in a second specific scenario according to this application;
FIG. 6 is a flowchart of a method for checking intent validity in a third specific scenario according to this application;
FIG. 7 is a flowchart of a method for checking intent validity in a fourth specific scenario according to this application;
FIG. 8 is a diagram of a structure of a communication apparatus according to this application; and
FIG. 9 is a diagram of a structure of another communication apparatus according to this application.

### DESCRIPTION OF EMBODIMENTS

For better explanation of embodiments of this application, related terms or technologies in this application are first explained as follows:
1. Intent: An intent is an expectation for an acted system, and includes a requirement, a target, and a constraint condition, but how to achieve the requirement, the target, and the constraint condition does not need to be described.
2. Intent expression: An intent expression is an expression used to carry the intent.

The intent expression may include an action and an object. The action is a network operation abstracted and simplified based on the intent, and may include an intent-driven action (intent driven action, IDA) name (name) and a series of related properties (for example, IDA properties, IDA properties). The object is management object information provided based on the intent, and may include an intent-driven object (intent driven object, IDO) name (name) and a series of properties (for example, IDO properties, IDO properties) used to identify the object. A target value of the intent may be included in the action or the object; or the intent expression includes the action, the object, and the target value. For example, the intent is to optimize a downlink rate of a cell. The action is "optimize", the object is "cell", and the target value is a specific value of the downlink rate of the cell.

The intent expression includes only a description of a target, and a specific implementation method of the intent is obtained by an intent producer by parsing and translating the intent expression. The intent producer may determine a solution to be used to meet the expectation. In other words, the intent producer may determine a solution to be used to meet the intent.

3. Intent conflict: When two intents cannot be met simultaneously due to mutual exclusion, the two intents conflict with each other. The intent conflict may include one or more of a syntax conflict, an operation conflict, or an effect conflict.

The syntax conflict means that there is a conflict between intent expressions of two intents. For example, the intent expressions of the two intents describe mutually exclusive targets of a same object (such as a cell or a base station) under a same effect taking condition. For example, if an intent expression of one intent reflects a target of increasing a downlink rate of a cell, and an intent expression of the other intent reflects a target of reducing the downlink rate of the cell, there is a syntax conflict between the two intents.

The operation conflict is a conflict between two intents in terms of translated execution operations (intent operation). In other words, operations of the two intents cannot be simultaneously performed. For example, solutions respectively corresponding to the two intents include mutually exclusive operations on a same parameter and/or attribute of a same network element. For example, when a solution of an intent 1 requires that a network configuration parameter A be increased, and a solution of an intent 2 requires that the network configuration parameter A be decreased, there is an operation conflict between the intent 1 and the intent 2.

The effect conflict means that translated execution operations of two intents are mutually exclusive in terms of effect.

4. Intent creation: Intent creation means to create an intent instance in an intent system and create corresponding intent context.

5. Intent consumer and intent producer.

The intent consumer is a device that manages the intent. Specifically, the intent consumer may generate the intent, and send, to the intent producer, an intent expression used to carry the intent. The intent may be a requirement of the intent consumer for a network in which a device executing an intent solution is located. For example, the intent may reflect a requirement of the intent consumer for at least one key performance indicator (key performance indicator, KPI) in the network in which the device executing the intent solution is located.

The intent producer is a device that processes the intent. Specifically, after receiving the intent expression from the intent consumer, the intent producer may generate a plurality of solutions that can meet the intent, and select one of the solutions for execution. Then, the intent producer may send the selected solution to the device executing the intent, so that the device executing the intent executes the selected solution.

The intent consumer and/or the intent producer may be AN devices, or may be CN devices. For example, the intent consumer may be a network management service (network management service, NMS), an IDMS consumer (IDMS consumer), or a management service consumer (management service consumer, MnS consumer), and the intent producer may be an element management service (element management service, EMS), an IDMS producer (IDMS producer), or a management service producer (management service producer, MnS producer).

It should be understood that the intent consumer and the intent producer may alternatively use other names provided that same functions are possessed. This is not limited in this application.

A communication system to which embodiments of this application are applied is described below with reference to the accompanying drawings.

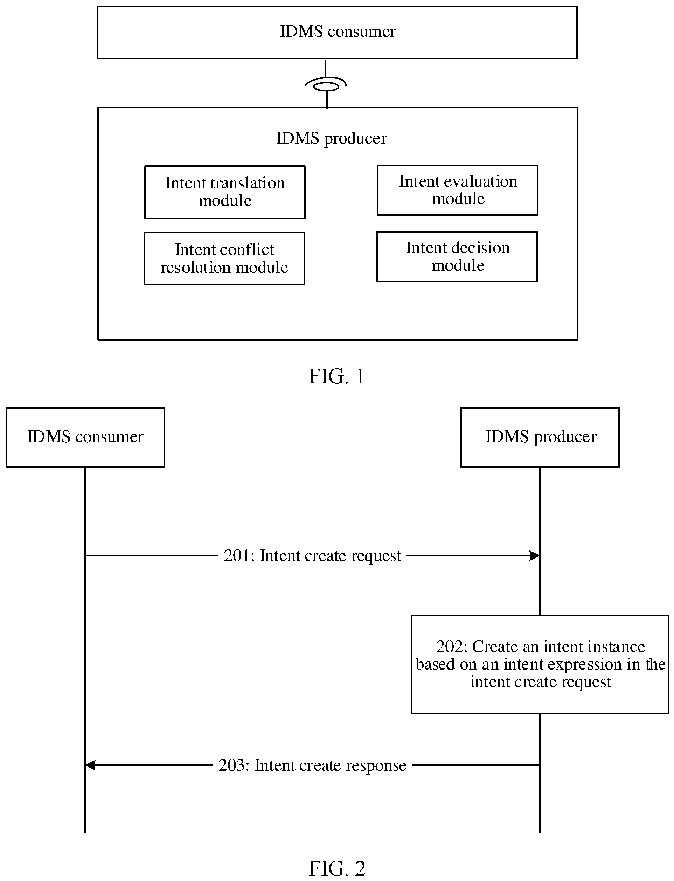

FIG. 1 shows a possible architecture of a communication system according to an example of this application. The communication system includes an IDMS consumer and an IDMS producer. The IDMS consumer may implement a function of an intent consumer, and the IDMS producer may implement a function of an intent producer. For specific content, refer to the term explanation part. Details are not described herein again.

The IDMS producer may include an intent translation (intent translation, IT) module, an intent evaluation (intent evaluation, IEv) module, an intent conflict resolution (intent conflict resolution, ICR) module, and an intent decision (intent decision, ID) module. The intent translation module, the intent evaluation module, the intent conflict resolution module, and the intent decision module may be independent entities, or may be virtual modules in one or more entities.

Specifically, the intent translation module may be configured to translate an intent and generate a solution that can meet the intent. For example, the intent translation module may obtain information required for intent translation, and the information may be a correspondence between an intent and a policy; the intent translation module may determine a policy of the intent based on the correspondence and the intent obtained from the IDMS consumer; and then, the intent translation module may generate, based on the policy of the intent, at least one solution that can meet the intent.

The intent evaluation module can evaluate an implementation situation of the intent.

The intent conflict resolution module may process an intent conflict. For example, the intent conflict resolution module may determine whether there is an intent conflict between two intents.

The intent decision module may determine a to-be-executed solution of the intent. For example, when the intent translation module generates at least one solution that can meet the intent, the intent decision module may randomly select, from the at least one solution, a solution that has no intent conflict with another intent for execution, or select, based on a preset policy, a solution that has no intent conflict with another intent for execution (for example, a solution with a minimum delay or a solution with minimum energy consumption).

FIG. 2 is a schematic flowchart of intent creation according to this application.

Step 201: An IDMS consumer sends an intent create request to an IDMS producer.

The intent create request may be used to indicate a to-be-created intent instance. Specifically, the intent create request may include an intent expression, and the intent expression may further include a plurality of attributes. One attribute may be represented by using a key-value pair, for example, the key-value pair is [attribute, value], where attribute represents an attribute name, value represents an attribute range, and the key-value pair may be used to indicate a created attribute name and an attribute range corresponding to the attribute name.

Step 202: The IDMS producer creates an intent instance based on the intent expression in the intent create request.

Step 203: The IDMS producer sends an intent create response to the IDMS consumer.

When the IDMS producer determines that the intent instance is successfully created, the intent create response sent to the IDMS consumer may be used to indicate that the intent instance is successfully created. When the IDMS producer determines that the intent instance fails to be created, the intent create response sent to the IDMS consumer may be used to indicate that the intent instance fails to be created.

In the foregoing solution, the IDMS consumer can know only whether the current intent instance is successfully created. However, when the creation fails, the IDMS consumer cannot know a cause of the creation failure, and therefore cannot properly modify the intent expression in the intent create request.

Based on the foregoing problem, this application provides a method for checking intent validity. A first device may check an intent expression, determine a reason why the intent expression fails to pass a validity check, and notify a second device of the reason why the intent expression fails to pass the validity check. Correspondingly, the second device may modify the intent expression in a targeted manner based on the reason why the first intent expression fails to pass the validity check, and request, based on the modified intent expression, the first device to create an intent.

The first device may be an intent producer, such as an EMS, an IDMS producer, or an MnS producer. The second device may be an intent consumer, such as an NMS, an IDMS consumer, or an MnS consumer.

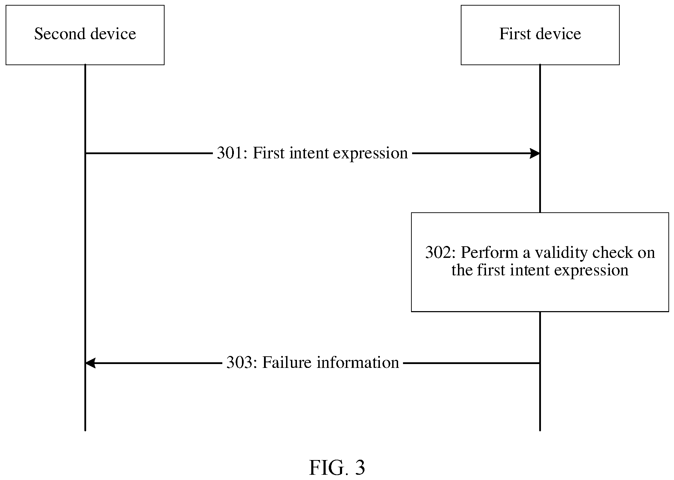

FIG. 3 is a flowchart of a method for checking intent validity.

Step 301: A second device sends a first intent expression to a first device.

The first intent expression is used to create an intent instance. The first intent expression includes a plurality of attributes, and the attribute may be a target or a constraint condition.

Further, an attribute may include an attribute name and an attribute range corresponding to the attribute name. For example, when the attribute is specifically a target, the target may be "throughput rate > 5 kbps", where an attribute name is "throughput rate", and an attribute range corresponding to the attribute name is "> 5 kbps". Alternatively, when the attribute is specifically a constraint condition, the constraint condition may be "users > 80%", where an attribute name is "users", and an attribute range corresponding to the attribute name is "> 80%".

Optionally, the constraint condition and the target may be in a correspondence, and the constraint condition is used to constrain an effect taking condition of the target corresponding to the constraint condition. For example, if the constraint condition "users > 80%" is in a correspondence with the target "throughput rate > 5 kbps", it may indicate that "throughput rates corresponding to more than 80% of users need to be greater than 5 kbps".

Step 302: The first device performs a validity check on the first intent expression.

The validity check may be used to indicate whether the first device further creates a corresponding intent instance based on the first intent expression. For example, when the first intent expression passes the validity check, the first device may create the intent instance based on the first intent expression, and may successfully create the intent instance; and when the first intent expression fails to pass the validity check, the first device does not need to create the intent instance based on the first intent expression.

The validity check may include at least one or more of an attribute conflict check or a syntax and lexicon check. The attribute conflict check and the syntax and lexicon check are first explained as follows.

### 1. Attribute conflict check

Conflict types of a conflict between attributes may include one or more of a syntax conflict, an operation conflict, or a semantic conflict. Two attributes are used as an example below for explanation.

The syntax conflict means that attribute names of the two attributes are the same, and an intersection set of an attribute range of one attribute and an attribute range of the other attribute is empty. For example, if one attribute is "throughput rate > 5 kbit/s" and the other attribute is "throughput rate ≤ 5 kbit/s", attribute names corresponding to the two attributes are both "throughput rate", there is no intersection set between corresponding attribute ranges, and there is a syntax conflict between the two attributes.

The operation conflict means that an operation indicated by an attribute name and an attribute range of one attribute and an operation indicated by an attribute name and an attribute range of the other attribute are mutually exclusive (in other words, the two operations cannot be simultaneously performed). For example, one attribute is "energy efficiency level: level 2", where an attribute name is "energy efficiency level", an attribute range is "level 2", and an operation jointly indicated by the attribute name and the attribute range is: turning on a symbol off switch; and the other attribute is "throughput rate ≥ 10 kbps", where an attribute name is "throughput rate", an attribute range is "≥ 10 kbps", and an operation jointly indicated by the attribute name and the attribute range is: turning off the symbol off switch. Therefore, the two operations cannot be simultaneously performed; in other words, there is an operation conflict.

The semantic conflict means that when an operation indicated by an attribute name and an attribute range of one attribute and an operation indicated by an attribute name and an attribute range of the other attribute are simultaneously performed, effect that can be achieved by the two operations is mutually exclusive (in other words, the two operations cannot simultaneously achieve expected effect). For example, one attribute is "energy efficiency level: level 2", where an attribute name is "energy efficiency level", and an attribute range is "level 2"; and the other attribute is "throughput rate ≥ 10 kbps", where an attribute name is "throughput rate", and an attribute range is "≥ 10 kbps". Through estimation, when the energy efficiency level is level 2, a corresponding throughput rate needs to be less than 10 kbps. In this way, expected effect corresponding to the two attributes cannot be simultaneously achieved.

It should be noted that the foregoing conflict may be a conflict between two attributes, or may be a conflict among a plurality of attributes. For example, if an attribute 1 is "throughput rate ≤ 5 kbit/s", an attribute 2 is "5 kbit/s < throughput rate < 10 kbit/s", and an attribute 3 is "10 kbit/s ≤ throughput rate", there is no intersection set among attribute ranges of the three attributes when attribute names are the same. In other words, there is a syntax conflict among the attribute 1, the attribute 2, and the attribute 3. Certainly, this application may further include other examples in which there is a conflict among a plurality of attributes. The examples are not described one by one.

The syntax conflict, the operation conflict, and the semantic conflict respectively correspond to a syntax conflict check, an operation conflict check, and a semantic conflict check. When performing the attribute conflict check, the first device may specifically perform one or more of the syntax conflict check, the operation conflict check, or the semantic conflict check.

In a specific example, the first device performs the syntax conflict check, the operation conflict check, and the semantic conflict check on the first intent expression. If the first device determines that the first intent expression passes the three conflict checks, the first device may determine that the first intent expression passes the attribute conflict check; or if the first device determines that the first intent expression fails to pass one of the three conflict checks, the first device may determine that the first intent expression fails to pass the attribute conflict check.

Alternatively, the first device may further perform one conflict check in the syntax conflict check, the operation conflict check, and the semantic conflict check on the first intent expression; when the first intent expression passes the conflict check, determine that the first intent expression passes the attribute conflict check; and when the first intent expression fails to pass the conflict check, determine that the first intent expression fails to pass the attribute conflict check. Alternatively, the first device may further perform two conflict checks in the syntax conflict check, the operation conflict check, and the semantic conflict check on the first intent expression. For details, refer to the foregoing description. Details are not described again.

### 2. Syntax and lexicon check

The first device may check whether an attribute that does not accord with the syntax and lexicon check exists in a plurality of attributes included in the first intent expression. The syntax and lexicon check may be performed based on an intent template in the first device.

The intent template may include a plurality of template attribute names and template attribute ranges corresponding to the plurality of template attribute names. For example, the intent template includes N template attribute names, where N is a positive integer, and the N template attribute names may respectively correspond to template attribute ranges of the template attribute names. It may also be understood as that the intent template includes a template attribute name 1 and a template attribute range 1 corresponding to the template attribute name 1, a template attribute name 2 and a template attribute range 2 corresponding to the template attribute name 2, ..., and a template attribute name N and a template attribute range N corresponding to the template attribute name N.

The intent template may be preconfigured in the first device, or may be dynamically loaded by the first device from an intent system management device. In the latter case, the intent template may be updated periodically, or may be updated by a system administrator when necessary.

The first device may perform the following operations for an attribute in the first intent expression: determining whether an attribute name of the attribute is in the intent template; and after determining that the attribute name of the attribute is in the intent template, determining whether an attribute range of the attribute exceeds a template attribute range that is in the intent template and that is corresponding to the attribute name of the attribute.

Specifically, if the first device determines that the attribute name of the attribute is in the intent template and the attribute range does not exceed the template attribute range that is in the intent template and that is corresponding to the attribute name, the first device may determine that the attribute passes the syntax and lexicon check; in other words, syntax and lexicon of the attribute are correct. If the first device determines that the attribute name of the attribute is not in the intent template, or if the first device determines that the attribute name is in the intent template but the attribute range exceeds the corresponding template attribute range in the intent template, the first device may determine that the attribute fails to pass the syntax and lexicon check; in other words, syntax and lexicon of the attribute are wrong.

Further, if the first device determines that the attribute name of the attribute is not in the intent template, the first device may consider that an error type is a syntax error; and if the first device determines that the attribute range in the attribute exceeds the corresponding template attribute range in the intent template, the first device may consider that the error type is a lexicon error.

For example, if the first intent expression includes an attribute "5 kbps < throughput rate < 8 kbps", and the intent template of the first device includes "5 kbps < throughput rate < 10 kbps", the first device may determine that the syntax and lexicon of the attribute are correct.

For another example, if the first intent expression includes an attribute "10 kbps ≤ throughput rate", and the intent template of the first device includes "5 kbps < throughput rate < 10 kbps", the first device may determine that the attribute name is in the intent template, but the attribute range exceeds the template attribute range that is in the intent template and that is corresponding to the attribute; in other words, the attribute has a syntax and lexicon error, and an error type is specifically a lexicon error.

In a possible manner, the first device may perform the attribute conflict check and the syntax and lexicon check, and when determining that the first intent expression fails to pass one of the checks, determine that the first intent expression fails to pass the validity check. When it is determined that the first intent expression passes the attribute conflict check and the syntax and lexicon check, it is determined that the first intent expression passes the validity check.

For example, that the first intent expression includes the first attribute and the second attribute that conflict with each other may also be understood as that the first device cannot generate the intent instance based on the first attribute name and the first attribute range in the first attribute and the second attribute name and the second attribute range in the second attribute. Both the first attribute and the second attribute may be targets; in other words, the first intent expression includes a first target and a second target that conflict with each other. Alternatively, both the first attribute and the second attribute may be constraint conditions; in other words, the first intent expression includes a first constraint condition and a second constraint condition that conflict with each other. The target means an objective that is to be achieved by the intent, and the constraint condition is a constraint condition for achieving the target. For example, in "to increase an average throughput rate of a terminal by 30% when energy consumption is increased by no more than 30%", "to increase an average throughput rate of a terminal by 30%" is the target, and "energy consumption is increased by no more than 30%" is the constraint condition.

Further, when performing the attribute conflict check on the first intent expression, the first device may determine that there is a conflict between the first attribute and the second attribute in the first intent expression, and a conflict type of the conflict between the first attribute and the second attribute may be one or more of a syntax conflict, an operation conflict, or a semantic conflict.

In still another example, the first intent expression may include a third attribute, the third attribute may include a third attribute name and a third attribute range, and the third attribute does not accord with the intent template in the first device. When the first device performs the syntax and lexicon check on the first intent expression, specifically, the first device may determine that the third attribute name is not included in the plurality of template attribute names in the intent template; or after determining that the third attribute name is included in the plurality of template attribute names in the intent template, the first device determines that the third attribute range exceeds a template attribute range that is in the intent template and that is corresponding to the third attribute.

Step 303: If the first device determines that the first intent expression fails to pass the validity check, the first device may send failure information to the second device, where the failure information may be used to indicate that the first intent expression cannot be used to successfully create the intent instance.

The failure information may be creation failure information, and the creation failure information may be used to indicate a reason why the first intent expression cannot be used to successfully create the intent instance, or a reason why creation of the intent instance fails.

The failure information may be alternatively check failure information, and the check failure information may be used to indicate a cause of a failure that the first intent expression fails to pass the validity check, or a reason why the validity check performed by the first device on the first intent expression fails.

It should be noted that, when the first intent expression fails to pass the validity check, the first intent expression cannot be used to successfully create the intent instance. It may also be understood that the creation failure information and the check failure information are same information. For the second device, after receiving the failure information from the first device, the second device may learn that the current first intent expression cannot be used to successfully create the intent instance. For ease of description, the failure information is used below as an example.

The failure information may include one or more of the following fields: an attribute conflict field or a syntax and lexicon error field.

The attribute conflict field may be used to indicate that the failure reason why the first intent expression fails to pass the validity check includes that there are conflicting attributes in the first intent expression. The attribute conflict field may include attributes that conflict with each other, and the type of the conflict between the attributes that conflict with each other.

For example, the first intent expression includes a first attribute and a second attribute that conflict with each other. Correspondingly, the attribute conflict field may include the first attribute, the second attribute, and the type of the conflict between the first attribute and the second attribute. For example, the first attribute is "throughput rate ≤ 5 kbps", and the second attribute is "throughput rate > 5 kbps". The attribute conflict field may include the two attributes, that is, "throughput rate ≤ 5 kbps" and "throughput rate > 5 kbps", and a conflict type "syntax conflict".

The syntax and lexicon error may be used to indicate that the cause of the failure that the first intent expression fails to pass the validity check includes that there is an attribute with a syntax and lexicon error in the first intent expression. The syntax and lexicon error field may include an attribute whose attribute name and/or attribute range are/is not included in the intent template.

For example, the first intent expression includes a third attribute with a syntax and lexicon error, and the syntax and lexicon error field may include the third attribute and an error type of the third attribute. For example, if the third attribute is "10 kbps ≤ throughput rate", and the attribute range in the third attribute exceeds a template attribute range that is in the intent template and that is corresponding to "throughput rate", the syntax and lexicon error field is "10 kbps ≤ throughput rate", and the error type is a lexicon error.

Optionally, the failure information may further include a failure indication field. The failure indication field may be used to indicate, to the second device, that the first intent expression fails to pass the validity check, or indicate, to the second device, that the first device cannot successfully create the intent instance based on the first intent expression.

When the first intent expression fails to pass the validity check, this application provides the following two implementations:
Implementation 1: The second device may modify the first intent expression based on the failure information to obtain a second intent expression, and then send the second intent expression to the first device.

Correspondingly, the first device receives the second intent expression, and the first device performs a validity check on the second intent expression. For a specific implementation, refer to the foregoing steps 301 and 302, and "first intent expression" is replaced with "second intent expression". Further, if the first device determines that the second intent expression fails to pass validity verification, the first device continues to send the failure information to the second device, and the first device continues to modify the intent expression. In this way, actions of the first device and the second device in the foregoing steps are cyclically performed until the first device determines that an intent expression of the second device passes the validity verification.

In the foregoing technical solution, the second device sends the first intent expression to the first device, and the first device may perform the validity check on the first intent expression; and when determining that the first intent expression fails to pass the validity check, the first device sends the failure information to the second device, that is, notifies the second device of the reason why the first intent expression fails to pass the validity verification. Therefore, the second device may perform targeted modification on the first intent expression based on the error cause. This helps the second device send, to the first device, an intent expression that can pass the validity check. Correspondingly, the first device may create a corresponding intent instance based on the intent expression that passes the validity check, thereby improving a success rate of creating an intent.

Implementation 2: The first device sends a recommended intent expression to the second device based on the first intent expression, where the recommended intent expression can pass the validity check.

Specifically, the first device may generate the recommended intent expression based on conflicting attributes and/or an attribute with a syntax and lexicon error in the first intent expression. The first attribute and the second attribute that conflict with each other and the third attribute with the syntax and lexicon error are used as examples below for description.
(1) Based on the first attribute name and the first attribute range in the first attribute and the second attribute name and the second attribute range in the second attribute, the first device adjusts one of the attribute ranges, adjusts the two attribute ranges, or deletes one of the attributes, so that there is no attribute conflict between the first attribute and the second attribute.
(2) If the third attribute name in the third attribute in the first intent expression is included in the intent template, and the third attribute range in the third attribute exceeds the template attribute range that is in the intent template and that is corresponding to the third attribute, the first device may adjust the third attribute range to be included in the template attribute range corresponding to the third attribute.
(3) If the third attribute name in the third attribute in the first intent expression is not included in the intent template, the first device may delete the attribute from the first intent expression.

The second device receives the recommended intent expression from the first device, determines whether to accept the recommended intent expression, and then sends an accept indication or a refuse indication to the first device. The accept indication may be used to indicate that the second device accepts the recommended intent expression, and the refuse indication may be used to indicate that the second device refuses to use the recommended intent expression.

When the second device sends the accept indication to the first device, the first device may receive the accept indication from the second device. Optionally, the first device may further generate the intent instance based on the recommended intent expression, and send, to the first device, creation success information about creating the intent instance.

When the second device sends the refuse indication to the first device, the second device may further generate the second intent expression based on the failure information and the first intent expression, and then send the second intent expression to the first device. For details, refer to the foregoing first implementation. Details are not described herein again.

The second device may include the refuse indication and the second intent expression to a same message, or may include the refuse indication and the second intent expression to two messages respectively.

Alternatively, the second intent expression may be understood as a refuse indication, and when the second device refuses to use the recommended intent expression, the second intent expression may be directly sent to the first device, to notify the first device that the second device refuses to use the recommended intent expression, and indicate the first device to continue to perform the validity check on the second intent expression.

In the foregoing technical solution, the second device sends the first intent expression to the first device, and the first device may perform the validity check on the first intent expression. When determining that the first intent expression fails to pass the validity check, the first device sends the recommended intent expression to the second device, that is, recommends, to the second device, the intent expression that can pass the validity check. Correspondingly, the second device may accept the recommended intent expression, and the first device may create the intent instance based on the recommended intent expression. This helps improve efficiency and a success rate of creating the intent instance. Further, the first device may further send the cause of the failure to the second device. When the second device refuses the recommended intent expression, the second device may perform targeted modification on the first intent expression based on the error cause. In this way, the second device may send, to the first device, the intent expression that can pass the validity check. This helps improve flexibility of creating the intent instance.

The foregoing information may be transferred by using different messages between the first device and the second device. Two examples are provided below.

### Example 1: An intent create request and an intent create response.

The first intent expression sent by the second device to the first device may be included in an intent create request. The intent create request indicates the first device to create the intent instance based on the first intent expression in the intent create request. Further, the intent create request further includes a check indication (flag), and the check indication may be used to indicate the first device to perform a validity check on the first intent expression before creating the intent instance.

After determining that the first intent expression passes the validity check, the first device may create the intent instance based on the first intent expression, and send an intent create response to the second device after the intent instance is successfully created. The intent create response includes creation success information, to indicate that the intent instance corresponding to the first intent expression is successfully created.

Alternatively, after determining that the first intent expression passes the validity check, the first device may send, to the second device, check success information used to indicate that the validity check succeeds; and after creating the intent instance, send, to the second device, an intent create response including creation success information, where the intent create response may be used to indicate that the intent instance is successfully created.

After determining that the first intent expression fails to pass the validity check, the first device may send failure information to the second device. The failure information is included in the intent create response. Correspondingly, after receiving the intent create response, the second device may send the intent create request including the second intent expression to the first device again, and the first device checks whether the second intent expression in the intent create request passes the validity check.

Alternatively, in another example, the second device may send an intent modify request including the second intent expression to the first device, and the first device performs a validity check based on the second intent expression in the intent modify request.

In addition, after creating the intent instance, the first device may not send an intent create response including creation success information to the second device. Correspondingly, after sending the intent create request, if the second device determines that the intent create response including the failure information is not received from the first device after preset duration expires, the second device may determine that the intent instance corresponding to the first intent expression has been successfully created. Certainly, there may be other implementations. Examples are not provided one by one in this application.

It should be further supplemented that, in this application, after receiving the first intent expression, the first device may alternatively not perform the validity check, but directly create the intent instance based on the first intent expression. If the intent instance fails to be created, the first device may send creation failure information (which is distinguished from the check failure information herein) to the second device. The creation failure information may include a reason why the first intent expression cannot be used to successfully create the intent instance.

### Example 2: An intent validity check request and an intent validity check response.

The first intent expression sent by the second device to the first device may be included in an intent validity check request, and the intent validity check request may be used to indicate the first device to perform a validity check on the first intent expression.

After determining that the first intent expression passes the validity check, the first device may send, to the second device, an intent validity check response including check success information. The intent validity check response may be used to indicate that the first intent expression passes the validity check. The second device may further send an intent create request to the first device, and the first device creates the intent instance based on the intent create request. Optionally, the intent create request may include the first intent expression.

Alternatively, after determining that the first intent expression fails to pass the validity check, the first device sends an intent validity check response including failure information to the second device. The intent validity check response may be used to indicate that the first intent expression fails to pass the validity check. The second device may further send an intent validity check request including the second intent expression to the first device, to indicate the first device to perform a validity check again on the second intent expression.

In addition, after determining that the first intent expression passes the validity check, the first device may alternatively not send an intent validity check response including check success information to the second device. Correspondingly, after sending the intent validity check request, if the second device determines that the intent validity check response including the failure information is not received from the first device after preset duration expires, the second device may determine that the first intent expression passes the validity check, and may continue to send the intent create request to the first device. Certainly, there may be other implementations. Examples are not provided one by one in this application.

In addition, the first intent expression may be alternatively included in another message, for example, an intent expression error check request, an intent error check request, or an intent attribute conflict check request. Correspondingly, a check result corresponding to the first intent expression may be included in a corresponding response.

Based on an invention concept that is the same as the above, four specific embodiments are provided below. A first device is an IDMS producer, and a second device is an IDMS consumer.

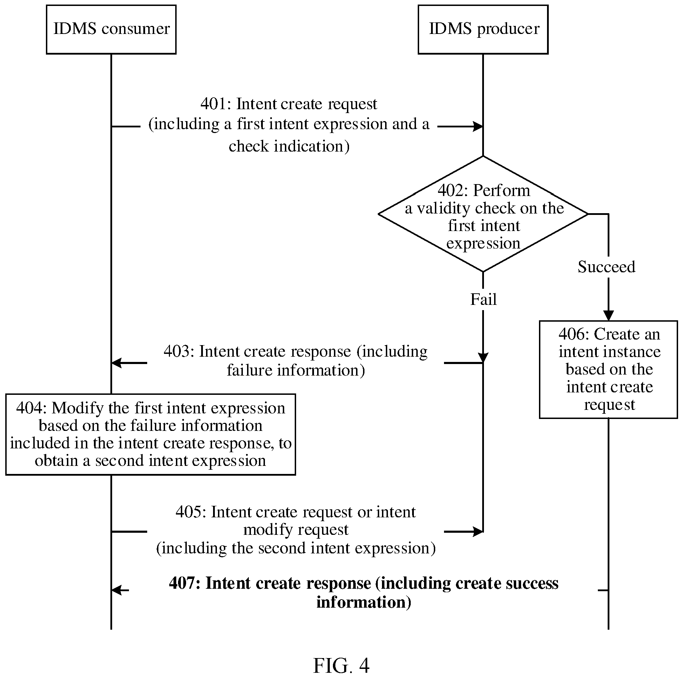

Embodiment 1: An IDMS consumer sends an intent create request to an IDMS producer, and the IDMS producer performs a validity check on a first intent expression in the intent create request. For details, refer to a schematic flowchart of FIG. 4.

Step 401: An IDMS consumer sends an intent create request to an IDMS producer.

The intent create request includes a first intent expression and a check indication (flag), and the check indication is used to indicate an IDMS producer to perform a validity check on the first intent expression. For a specific implementation, refer to the descriptions in step 301.

Step 402: The IDMS producer performs the validity check on the first intent expression.

The IDMS producer may perform a lexicon and syntax check and an attribute conflict check on the first intent expression. For a specific implementation, refer to the descriptions in step 302.

When the first intent expression fails to pass the validity check, the following step 403 to step 405 are performed. When the first intent expression passes the validity check, the following step 406 and step 407 are performed.

Step 403: The IDMS producer sends an intent create response to the IDMS consumer, where the intent create response includes failure information, to indicate that the first intent expression fails to pass the validity check and indicate a reason why the first intent expression fails to pass the validity check.

For example, the failure information includes at least the following fields: a failure indication field, a syntax and lexicon error field, and an attribute conflict field. For a specific implementation, refer to the descriptions in step 303.

Step 404: The IDMS consumer modifies the first intent expression based on the failure information included in the intent create response, to obtain a second intent expression. For a specific implementation, refer to the descriptions in step 303.

Step 405: The IDMS consumer sends an intent create request or an intent modify request to the IDMS producer, where the intent create request or the intent modify request includes the second intent expression. Optionally, the intent create request or the intent modify request may further include a check indication (flag).

Step 406: The IDMS producer creates an intent instance based on the intent create request.

Step 407: The IDMS producer sends an intent create response to the IDMS consumer, where the intent create response includes creation success information, to notify the IDMS consumer that the intent instance is successfully created.

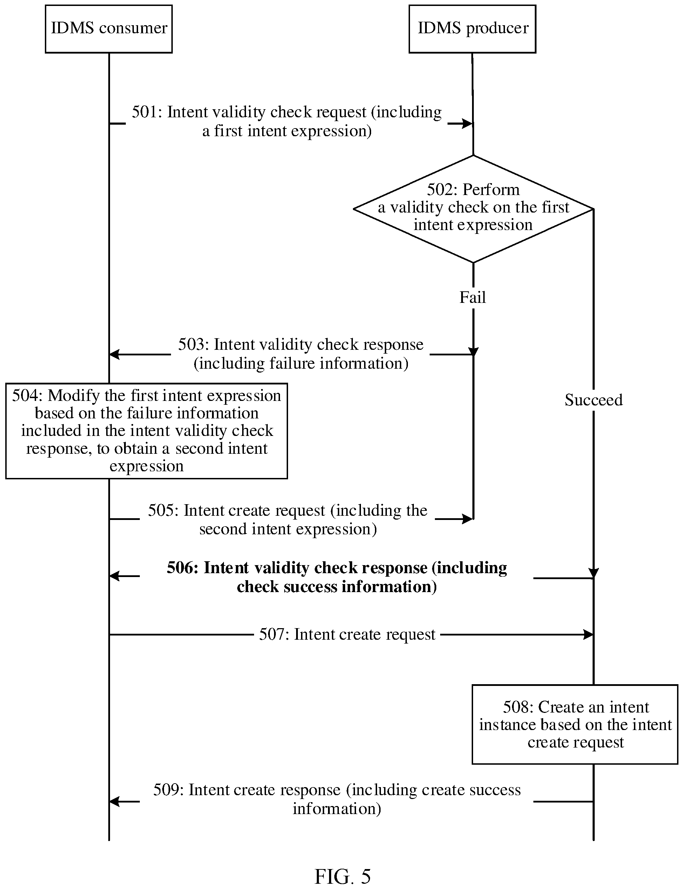

Embodiment 2: An IDMS consumer sends an intent validity check request to an IDMS producer, and the IDMS producer performs a validity check on a first intent expression in the intent validity check request. For details, refer to a schematic flowchart of FIG. 5.

Step 501: An IDMS consumer sends an intent validity check request to an IDMS producer, where the intent validity check request indicates the IDMS producer to perform a validity check on a first intent expression included in the intent validity check request. For a specific implementation, refer to the descriptions in step 301.

Step 502: The IDMS producer performs the validity check on the first intent expression.

The IDMS producer may perform a lexicon and syntax check and an attribute conflict check on the first intent expression. For a specific implementation, refer to the descriptions in step 302.

When the first intent expression fails to pass the validity check, the following step 503 to step 505 are performed. When the first intent expression passes the validity check, the following step 506 and step 509 are performed.

Step 503: The IDMS producer sends an intent validity check response to the IDMS consumer, where the intent validity check response includes failure information (which may be specifically check failure information), to indicate that the first intent expression fails to pass the validity check and indicate a reason why the first intent expression fails to pass the validity check.

For example, the failure information includes at least the following fields: a failure indication field, a syntax and lexicon error field, and an attribute conflict field. For a specific implementation, refer to the descriptions in step 303.

Step 504: The IDMS consumer modifies the first intent expression based on the failure information included in the intent validity check response, to obtain a second intent expression. For a specific implementation, refer to the descriptions in step 303.

Step 505: The IDMS consumer sends an intent create request to the IDMS producer, where the intent create request includes the second intent expression.

In another embodiment, the IDMS consumer may further send the intent validity check request to the IDMS producer again, to indicate the IDMS producer to perform a validity check on the second intent expression included in the intent validity check request.

Step 506: The IDMS producer sends an intent validity check response to the IDMS consumer, where the intent validity check response includes check success information, to indicate that the first intent expression passes the validity check.

Step 507: The IDMS consumer sends an intent create request to the IDMS producer, to indicate the IDMS producer to create an intent instance based on the first intent expression. Optionally, the intent create request includes the first intent expression.

Step 508: The IDMS consumer creates the intent instance based on the intent create request.

Step 509: The IDMS consumer sends an intent create response to the IDMS producer, where the intent create response includes creation success information, to notify the IDMS consumer that the intent instance is successfully created.

For all implementations that are not described in detail in step 505 to step 509, refer to the descriptions in the related embodiment in FIG. 3.

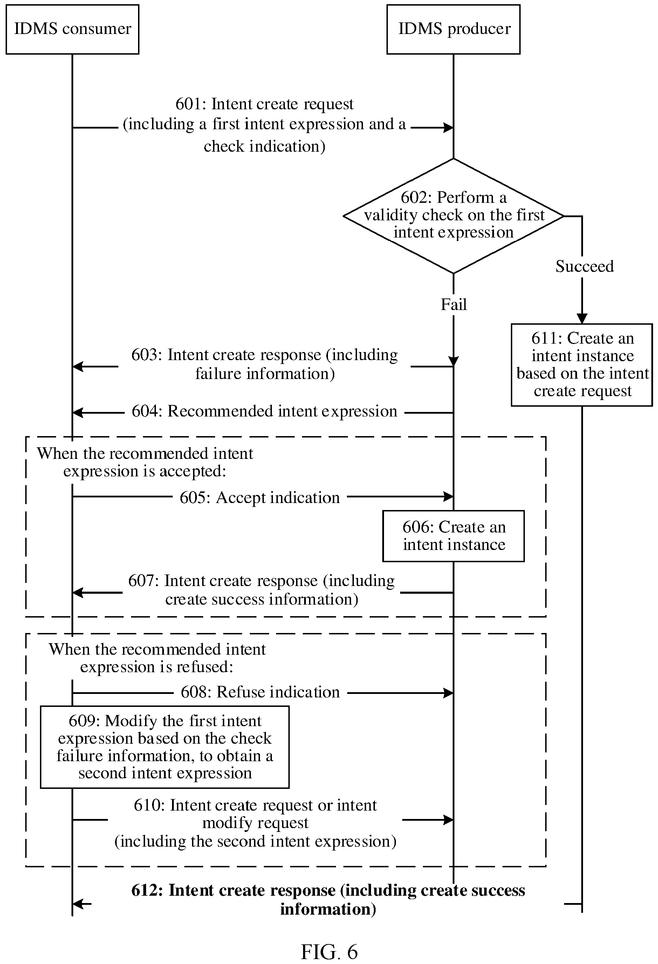

Embodiment 3: An IDMS consumer sends an intent create request to an IDMS producer, and the IDMS producer performs a validity check on a first intent expression in the intent create request, and sends a recommended intent expression to the IDMS consumer after determining that the first intent expression fails to pass the validity check. For details, refer to a schematic flowchart of FIG. 6.

Step 601: An IDMS consumer sends an intent create request to an IDMS producer, where the intent create request includes a first intent expression and a check indication (flag), and the check indication is used to indicate the IDMS producer to perform a validity check on the first intent expression. For a specific implementation, refer to the descriptions in step 301.

Step 602: The IDMS producer performs the validity check on the first intent expression.

The IDMS producer may perform a lexicon and syntax check and an attribute conflict check on the first intent expression. For a specific implementation, refer to the descriptions in step 302.

When the first intent expression fails to pass the validity check, the following step 603 to step 610 are performed. When the first intent expression passes the validity check, the following step 611 and step 612 are performed.

Step 603: The IDMS producer sends an intent create response to the IDMS consumer, where the intent create response includes failure information, to indicate that the first intent expression fails to pass the validity check and indicate a reason why the first intent expression fails to pass the validity check.

For example, the failure information includes at least the following fields: a failure indication field, a syntax and lexicon error field, and an attribute conflict field. For a specific implementation, refer to the descriptions in step 303.

Step 604: The IDMS producer generates a recommended intent expression based on the first intent expression, and sends the recommended intent expression to the second device, where the recommended intent expression can pass the validity check.

Correspondingly, the IDMS consumer may determine, based on the recommended intent expression from the IDMS producer, whether to receive the recommended intent expression. There are two cases as follows:

When the IDMS consumer accepts the recommended intent expression, the following steps are performed.

Step 605: The IDMS consumer sends an accept indication to the IDMS producer, to indicate that the IDMS consumer accepts the recommended intent expression.

Step 606: The IDMS producer creates an intent instance based on the recommended intent expression.

Step 607: The IDMS producer sends an intent create response to the IDMS consumer, where the intent create response includes creation success information, to notify the IDMS consumer that the intent instance is successfully created.

When the IDMS consumer refuses the recommended intent expression, the following steps are performed.

Step 608: The IDMS consumer sends a refuse indication to the IDMS producer, to indicate that the IDMS consumer refuses the recommended intent expression.

Step 609: The IDMS consumer modifies the first intent expression based on the failure information included in the intent create response, to obtain a second intent expression.

Step 610: The IDMS consumer sends an intent create request or an intent modify request to the IDMS producer, where the intent create request or the intent modify request includes the second intent expression. Optionally, the intent create request or the intent modify request may further include a check indication (flag).

Step 611: The IDMS producer creates an intent instance based on the intent create request.

Step 612: The IDMS producer sends an intent create response to the IDMS consumer, where the intent create response includes creation success information, to notify the IDMS consumer that the intent instance is successfully created.

It should be supplemented that step 603 is an optional step, or step 604 may be directly performed after step 602. Alternatively, a sequence in which the IDMS producer sends the intent create response including the failure information to the IDMS consumer and sends the recommended intent expression to the IDMS consumer may not be limited. In addition, the intent create response including the failure information may further include the recommended intent expression or another manner.

For all implementations that are not described in detail in step 604 to step 612, refer to the descriptions in the related embodiment in FIG. 3.

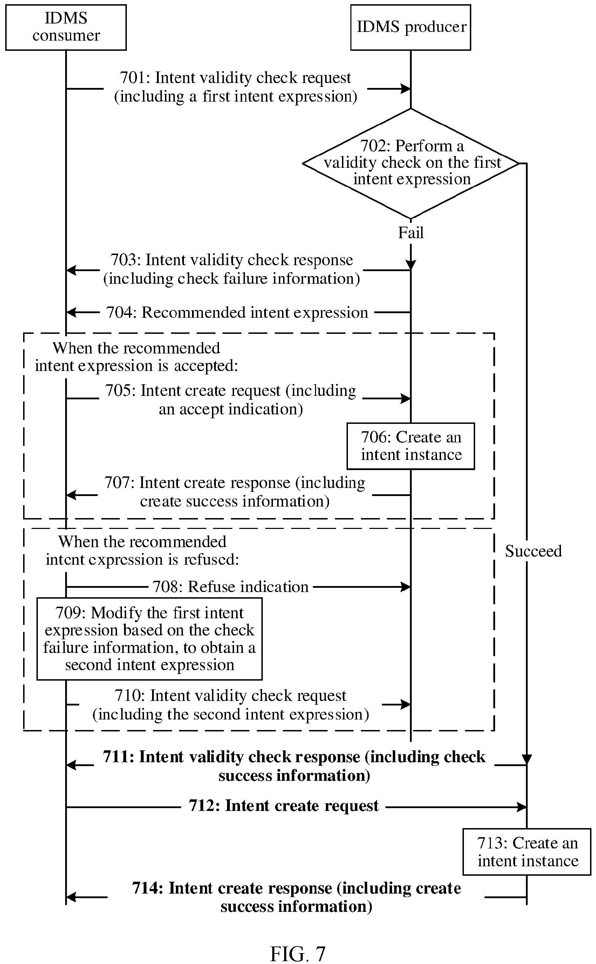

Embodiment 4: An IDMS consumer sends an intent validity check request to an IDMS producer, and the IDMS producer performs a validity check on a first intent expression in the intent validity check request, and recommends an intent expression to the IDMS consumer after determining that the first intent expression fails to pass the validity check. For details, refer to a schematic flowchart of FIG. 7.

Step 701: An IDMS consumer sends an intent validity check request to an IDMS producer, where the intent validity check request is used to indicate the IDMS producer to perform a validity check on a first intent expression in the intent validity check request. For a specific implementation, refer to the descriptions in step 301.

Step 702: The IDMS producer performs the validity check on the first intent expression.

The IDMS producer may perform a lexicon and syntax check and an attribute conflict check on the first intent expression. For a specific implementation, refer to the descriptions in step 302.

When the first intent expression fails to pass the validity check, the following step 703 to step 710 are performed. When the first intent expression passes the validity check, the following step 711 to step 714 are performed.

Step 703: The IDMS producer sends an intent validity check response to the IDMS consumer.

The intent validity check response includes failure information (which may be specifically check failure information), to indicate that the first intent expression fails to pass the validity check and indicate a reason why the first intent expression fails to pass the validity check.

For example, the failure information includes at least the following fields: a failure indication field, a syntax and lexicon error field, and an attribute conflict field. For a specific implementation, refer to the descriptions in step 303.

Step 704: The IDMS producer generates a recommended intent expression based on the first intent expression, and sends the recommended intent expression to the second device, where the recommended intent expression can pass the validity check.

Correspondingly, the IDMS consumer may determine, based on the recommended intent expression from the IDMS producer, whether to receive the recommended intent expression. There are two cases as follows:

When the IDMS consumer accepts the recommended intent expression, the following steps are performed.

Step 705: The IDMS consumer sends an intent create request to the IDMS producer, where the intent create request includes an accept indication, to indicate that the IDMS consumer accepts the recommended intent expression, and indicate the IDMS producer to create an intent instance based on the recommended intent expression.

Step 706: The IDMS producer creates the intent instance based on the recommended intent expression.

Step 707: The IDMS producer sends an intent create response to the IDMS consumer, where the intent create response includes creation success information, to indicate that the IDMS producer has successfully created the intent instance.

When the IDMS consumer refuses the recommended intent expression, the following steps are performed.

Step 708: The IDMS consumer sends a refuse indication to the IDMS producer, to indicate that the IDMS consumer refuses the recommended intent expression.

Step 709: The IDMS consumer modifies the first intent expression based on the failure information included in the intent validity check response, to obtain a second intent expression.

Step 710: The IDMS consumer sends an intent validity check request to the IDMS producer, to indicate the IDMS producer to perform a validity check on the second intent expression included in the intent validity check request.

Step 711: The IDMS producer sends an intent validity check response to the IDMS consumer, where the intent validity check response includes check success information, to indicate that the first intent expression passes the validity check.

Step 712: The IDMS consumer sends an intent create request to the IDMS producer, to indicate the IDMS producer to create an intent instance based on the first intent expression. Optionally, the intent create request includes the first intent expression.

Step 713: The IDMS producer creates the intent instance based on the intent create request.

Step 714: The IDMS producer sends an intent create response to the IDMS consumer, where the intent create response includes creation success information, to indicate that the IDMS producer has successfully created the intent instance.

For all implementations that are not described in detail in step 704 to step 714, refer to the descriptions in the related embodiment in FIG. 3.

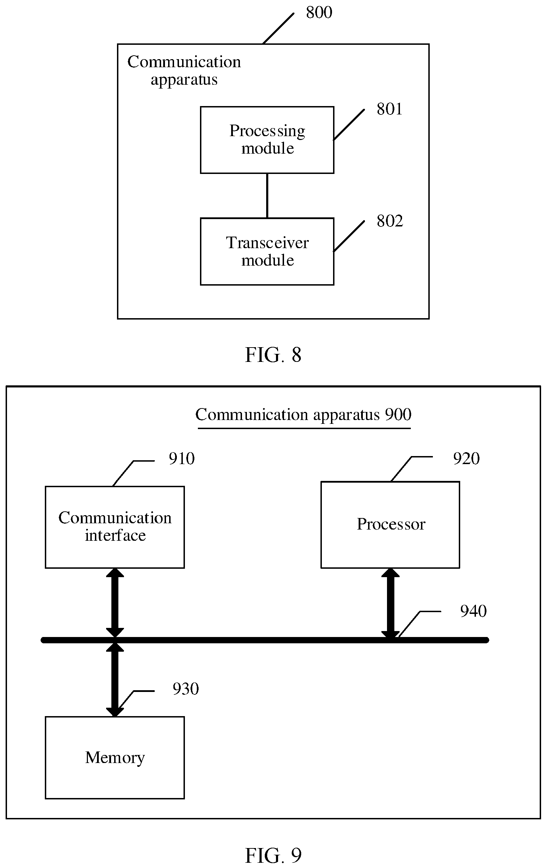

Based on the foregoing content and a same concept, FIG. 8 and FIG. 9 are diagrams of structures of possible communication apparatuses according to this application. These communication apparatuses may be configured to implement functions in the foregoing method embodiments, and therefore can also implement beneficial effect of the foregoing method embodiments. As shown in FIG. 8, the communication apparatus 800 may include a processing module 801 and a transceiver module 802.

When the communication apparatus 800 is configured to implement functions of the first device in the method embodiment shown in FIG. 3, or is configured to implement functions of the IDMS producer in FIG. 4 to FIG. 7, there is the following case:

In a possible implementation, the processing module 801 is configured to control the transceiver module 802 to receive a first intent expression from a second device, where the first intent expression is used to create an intent instance; and the processing module 801 is further configured to control, based on the first intent expression, the transceiver module 802 to send failure information to the second device, where the failure information is used to indicate a cause of a failure in creation of the intent instance, the first intent expression includes a plurality of attributes, the cause of the failure includes that there are conflicting attributes in the first intent expression, and the attribute is a target or a constraint condition.

In a possible implementation, when controlling, based on the first intent expression, the transceiver module 802 to send the failure information to the second device, the processing module 801 is specifically configured to: perform a validity check on the first intent expression; and after determining that the first intent expression fails to pass the validity check, generate the failure information based on a reason why the first intent expression fails to pass the validity check.

In a possible implementation, the cause of the failure includes that there are a first attribute and a second attribute that conflict with each other in the first intent expression, the first attribute includes a first attribute name and a first attribute range, and the second attribute includes a second attribute name and a second attribute range; and a type of the conflict includes one or more of the following: a syntax conflict, used to indicate that the first attribute name is the same as the second attribute name and an intersection set of the first attribute range and the second attribute range is empty; an operation conflict, used to indicate that an operation indicated by the first attribute name and the first attribute range is mutually exclusive with an operation indicated by the second attribute name and the second attribute range; or an effect conflict, used to indicate that when the operation indicated by the first attribute name and the first attribute range and the operation indicated by the second attribute name and the second attribute range are simultaneously performed, effect achieved by the two operations is mutually exclusive.

In a possible implementation, the failure information includes the first attribute, the second attribute, and the type of the conflict between the first attribute and the second attribute.

In a possible implementation, the cause of the failure further includes that a third attribute in the first intent expression does not accord with an intent template in the communication apparatus 800; the intent template includes a plurality of template attribute names and template attribute ranges respectively corresponding to the plurality of template attribute names; the third attribute includes a third attribute name and a third attribute range; and that the third attribute in the first intent expression does not accord with the intent template in the communication apparatus 800 includes: the third attribute name is not included in the plurality of template attribute names in the intent template; or the third attribute range exceeds a template attribute range that is in the intent template and that is corresponding to the third attribute.

In a possible implementation, the failure information further includes the third attribute.

In a possible implementation, the processing module 801 is further configured to: control, based on the first intent expression, the transceiver module 802 to send a recommended intent expression to the second device; and after determining that the second device accepts the recommended intent expression, create the intent instance based on the recommended intent expression.

In a possible implementation, the processing module 801 is further configured to control the transceiver module 802 to receive a second intent expression from the second device, where the second intent expression is obtained after the second device modifies the first intent expression based on the cause of the failure.

In a possible implementation, the first intent expression is included in an intent create request, the failure information is included in an intent create response, and the second intent expression is included in an intent modify request.

In a possible implementation, the intent create request further includes a check indication, and the check indication is used to indicate the communication apparatus 800 to perform the validity check on the first intent expression.

In a possible implementation, the first intent expression is included in an intent validity check request, the failure information is included in an intent validity check response, and the second intent expression is included in an intent create request.

In a possible implementation, the failure information includes one or more of the following: conflicting attributes, a type of a conflict between conflicting attributes, or an attribute whose attribute name and/or attribute range are/is not included in the intent template.

When the communication apparatus 800 is configured to implement functions of the second device in the method embodiment shown in FIG. 3, or is configured to implement functions of the IDMS consumer in FIG. 4 to FIG. 7, there is the following case:

In a possible implementation, the processing module 801 is configured to control the transceiver module 802 to send a first intent expression to a first device, where the first intent expression is used to create an intent instance; and the processing module 801 is further configured to control the transceiver module 802 to receive failure information from the first device, where the failure information is used to indicate a cause of a failure in creation of the intent instance, the first intent expression includes a plurality of attributes, the cause of the failure includes that there are conflicting attributes in the first intent expression, and the attribute is a target or a constraint condition.

In a possible implementation, the processing module 801 is further configured to control the transceiver module 802 to receive a recommended intent expression from the first device, and send, to the first device, an indication of accepting the recommended intent expression, where the recommended intent expression is used to create the intent instance.

In a possible implementation, the processing module 801 is further configured to control the transceiver module 802 to modify the first intent expression based on the cause of the failure to obtain a second intent expression, and send the second intent expression to the first device.

FIG. 9 shows an apparatus 900 according to an embodiment of this application. The apparatus shown in FIG. 9 may be an implementation of a hardware circuit of the apparatus shown in FIG. 8. The apparatus may be applicable to performing functions in the foregoing method embodiments in the flowchart shown above. For ease of description, FIG. 9 shows only main components of the apparatus.

The apparatus 900 shown in FIG. 9 includes a communication interface 910, a processor 920, and a memory 930. The memory 930 is configured to store program instructions and/or data. The processor 920 may operate in collaboration with the memory 930. The processor 920 may execute the program instructions stored in the memory 930. When the instructions or the program stored in the memory 930 is executed, the processor 920 is configured to perform operations performed by the processing module 801 in the foregoing embodiment, and the communication interface 910 is configured to perform operations performed by the transceiver module 802 in the foregoing embodiment.

The memory 930 is coupled to the processor 920. The coupling in this embodiment of this application may be indirect coupling or a communication connection between apparatuses, units, or modules in an electrical form, a mechanical form, or another form, and is used for information exchange between the apparatuses, the units, or the modules. At least one of the memories 930 may be included in the processor 920.

In this embodiment of this application, the communication interface may be a transceiver, a circuit, a bus, a module, or a communication interface of another type. In this embodiment of this application, when the communication interface is a transceiver, the transceiver may include an independent receiver and an independent transmitter, or may be a transceiver integrated with a transceiver function or a communication interface.

The apparatus 900 may further include a communication line 940. The communication interface 910, the processor 920, and the memory 930 may be interconnected by using the communication line 940. The communication line 940 may be a peripheral component interconnect (peripheral component interconnect, PCI for short) bus, an extended industry standard architecture (extended industry standard architecture, EISA for short) bus, or the like. The communication line 940 may be classified into an address bus, a data bus, a control bus, and the like. For ease of representation, only one thick line is used to represent the bus in FIG. 9, but this does not mean that there is only one bus or only one type of bus.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A method for checking intent validity, comprising:
receiving, by a first device, a first intent expression from a second device, wherein the first intent expression is used to create an intent instance; and
sending, by the first device, failure information to the second device based on the first intent expression, wherein the failure information is used to indicate a cause of a failure in creation of the intent instance, and
the first intent expression comprises a plurality of attributes, the cause of the failure comprises that there are conflicting attributes in the first intent expression, and the attribute is a target or a constraint condition.

2. The method according to claim 1, wherein the sending, by the first device, failure information to the second device based on the first intent expression comprises:
performing, by the first device, a validity check on the first intent expression; and
after determining that the first intent expression fails to pass the validity check, generating, by the first device, the failure information based on a reason why the first intent expression fails to pass the validity check.

3. The method according to claim 1 or 2, wherein the cause of the failure comprises that there are a first attribute and a second attribute that conflict with each other in the first intent expression, the first attribute comprises a first attribute name and a first attribute range, and the second attribute comprises a second attribute name and a second attribute range;
a type of the conflict comprises one or more of the following:
a syntax conflict, used to indicate that the first attribute name is the same as the second attribute name and an intersection set of the first attribute range and the second attribute range is empty;
an operation conflict, used to indicate that an operation indicated by the first attribute name and the first attribute range is mutually exclusive with an operation indicated by the second attribute name and the second attribute range; or
an effect conflict, used to indicate that when the operation indicated by the first attribute name and the first attribute range and the operation indicated by the second attribute name and the second attribute range are simultaneously performed, effect achieved by the two operations is mutually exclusive; and
the failure information comprises the first attribute, the second attribute, and the type of the conflict between the first attribute and the second attribute.

4. The method according to any one of claims 1 to 3, wherein the cause of the failure further comprises that a third attribute in the first intent expression does not accord with an intent template in the first device;
the intent template comprises a plurality of template attribute names and template attribute ranges respectively corresponding to the plurality of template attribute names, and the third attribute comprises a third attribute name and a third attribute range;
that the third attribute in the first intent expression does not accord with the intent template in the first device comprises:
the third attribute name is not comprised in the plurality of template attribute names in the intent template; or
the third attribute range exceeds a template attribute range that is in the intent template and that is corresponding to the third attribute; and
the failure information further comprises the third attribute.

5. The method according to any one of claims 1 to 4, further comprising:
sending, by the first device, a recommended intent expression to the second device based on the first intent expression; and
after determining that the second device accepts the recommended intent expression, creating, by the first device, the intent instance based on the recommended intent expression.

6. The method according to any one of claims 1 to 4, further comprising:
receiving, by the first device, a second intent expression from the second device, wherein the second intent expression is obtained after the second device modifies the first intent expression based on the cause of the failure.

7. The method according to any one of claims 1 to 6, wherein the first intent expression is comprised in an intent create request, the failure information is comprised in an intent create response, the intent create request further comprises a check indication, and the check indication is used to indicate the first device to perform the validity check on the first intent expression; or
the first intent expression is comprised in an intent validity check request, and the failure information is comprised in an intent validity check response.

8. A method for checking intent validity, comprising:
sending, by a second device, a first intent expression to a first device, wherein the first intent expression is used to create an intent instance; and
receiving, by the second device, failure information from the first device, wherein the failure information is used to indicate a cause of a failure in creation of the intent instance, and
the first intent expression comprises a plurality of attributes, the cause of the failure comprises that there are conflicting attributes in the first intent expression, and the attribute is a target or a constraint condition.

9. The method according to claim 8, wherein the cause of the failure comprises that there are a first attribute and a second attribute that conflict with each other in the first intent expression, the first attribute comprises a first attribute name and a first attribute range, and the second attribute comprises a second attribute name and a second attribute range;
a type of the conflict comprises one or more of the following:
a syntax conflict, used to indicate that the first attribute name is the same as the second attribute name and an intersection set of the first attribute range and the second attribute range is empty;
an operation conflict, used to indicate that an operation indicated by the first attribute name and the first attribute range is mutually exclusive with an operation indicated by the second attribute name and the second attribute range; or
an effect conflict, used to indicate that when the operation indicated by the first attribute name and the first attribute range and the operation indicated by the second attribute name and the second attribute range are simultaneously performed, effect achieved by the two operations is mutually exclusive; and
the failure information comprises the first attribute, the second attribute, and the type of the conflict between the first attribute and the second attribute.

10. The method according to claim 8 or 9, wherein the cause of the failure further comprises that a third attribute in the first intent expression does not accord with an intent template in the first device;
the intent template comprises a plurality of template attribute names and template attribute ranges respectively corresponding to the plurality of template attribute names, and the third attribute comprises a third attribute name and a third attribute range;
that the third attribute in the first intent expression does not accord with the intent template in the first device comprises:
the third attribute name is not comprised in the plurality of template attribute names in the intent template; or
the third attribute range exceeds a template attribute range that is in the intent template and that is corresponding to the third attribute; and
the failure information further comprises the third attribute.

11. The method according to any one of claims 8 to 10, further comprising:
receiving, by the second device, a recommended intent expression from the first device; and
sending, by the second device, an indication of accepting the recommended intent expression to the first device, wherein the recommended intent expression is used to create the intent instance.

12. The method according to any one of claims 8 to 10, further comprising:
modifying, by the second device, the first intent expression based on the cause of the failure to obtain a second intent expression, and sending the second intent expression to the first device.

13. The method according to any one of claims 8 to 12, wherein the first intent expression is comprised in an intent create request, the failure information is comprised in an intent create response, the intent create request further comprises a check indication, and the check indication is used to indicate the first device to perform a validity check on the first intent expression; or
the first intent expression is comprised in an intent validity check request, and the failure information is comprised in an intent validity check response.

14. A communication apparatus, comprising:
a processing module, configured to control a transceiver module to receive a first intent expression from a second device, wherein the first intent expression is used to create an intent instance, and
the processing module is further configured to control, based on the first intent expression, the transceiver module to send failure information to the second device, wherein the failure information is used to indicate a cause of a failure in creation of the intent instance, and
the first intent expression comprises a plurality of attributes, the cause of the failure comprises that there are conflicting attributes in the first intent expression, and the attribute is a target or a constraint condition.

15. The apparatus according to claim 14, wherein when controlling, based on the first intent expression, the transceiver module to send the failure information to the second device, the processing module is specifically configured to:
perform a validity check on the first intent expression; and
after it is determined that the first intent expression fails to pass the validity check, generate the failure information based on a reason why the first intent expression fails to pass the validity check.

16. The apparatus according to claim 14 or 15, wherein the cause of the failure comprises that there are a first attribute and a second attribute that conflict with each other in the first intent expression, the first attribute comprises a first attribute name and a first attribute range, and the second attribute comprises a second attribute name and a second attribute range;
a type of the conflict comprises one or more of the following:
a syntax conflict, used to indicate that the first attribute name is the same as the second attribute name and an intersection set of the first attribute range and the second attribute range is empty;
an operation conflict, used to indicate that an operation indicated by the first attribute name and the first attribute range is mutually exclusive with an operation indicated by the second attribute name and the second attribute range; or
an effect conflict, used to indicate that when the operation indicated by the first attribute name and the first attribute range and the operation indicated by the second attribute name and the second attribute range are simultaneously performed, effect achieved by the two operations is mutually exclusive; and
the failure information comprises the first attribute, the second attribute, and the type of the conflict between the first attribute and the second attribute.

17. The apparatus according to any one of claims 14 to 16, wherein the cause of the failure further comprises that a third attribute in the first intent expression does not accord with an intent template in the apparatus;
the intent template comprises a plurality of template attribute names and template attribute ranges respectively corresponding to the plurality of template attribute names, and the third attribute comprises a third attribute name and a third attribute range;
that the third attribute in the first intent expression does not accord with the intent template in the apparatus comprises:
the third attribute name is not comprised in the plurality of template attribute names in the intent template; or
the third attribute range exceeds a template attribute range that is in the intent template and that is corresponding to the third attribute; and
the failure information further comprises the third attribute.

18. The apparatus according to any one of claims 14 to 17, wherein the processing module is further configured to:
control, based on the first intent expression, the transceiver module to send a recommended intent expression to the second device; and
after it is determined that the second device accepts the recommended intent expression, create the intent instance based on the recommended intent expression.

19. The apparatus according to any one of claims 14 to 17, wherein the processing module is further configured to:
control the transceiver module to receive a second intent expression from the second device, wherein the second intent expression is obtained after the second device modifies the first intent expression based on the cause of the failure.

20. The apparatus according to any one of claims 14 to 19, wherein the first intent expression is comprised in an intent create request, the failure information is comprised in an intent create response, the intent create request further comprises a check indication, and the check indication is used to indicate the apparatus to perform a validity check on the first intent expression; or
the first intent expression is comprised in an intent validity check request, and the failure information is comprised in an intent validity check response.

21. A communication apparatus, comprising:
a processing module, configured to control a transceiver module to send a first intent expression to a first device, wherein the first intent expression is used to create an intent instance, and
the processing module is further configured to control the transceiver module to receive failure information from the first device, wherein the failure information is used to indicate a cause of a failure in creation of the intent instance, and
the first intent expression comprises a plurality of attributes, the cause of the failure comprises that there are conflicting attributes in the first intent expression, and the attribute is a target or a constraint condition.

22. The apparatus according to claim 21, wherein the cause of the failure comprises that there are a first attribute and a second attribute that conflict with each other in the first intent expression, the first attribute comprises a first attribute name and a first attribute range, and the second attribute comprises a second attribute name and a second attribute range;
a type of the conflict comprises one or more of the following:
a syntax conflict, used to indicate that the first attribute name is the same as the second attribute name and an intersection set of the first attribute range and the second attribute range is empty;
an operation conflict, used to indicate that an operation indicated by the first attribute name and the first attribute range is mutually exclusive with an operation indicated by the second attribute name and the second attribute range; or
an effect conflict, used to indicate that when the operation indicated by the first attribute name and the first attribute range and the operation indicated by the second attribute name and the second attribute range are simultaneously performed, effect achieved by the two operations is mutually exclusive; and
the failure information comprises the first attribute, the second attribute, and the type of the conflict between the first attribute and the second attribute.

23. The apparatus according to claim 21 or 22, wherein the cause of the failure further comprises that a third attribute in the first intent expression does not accord with an intent template in the first device;
the intent template comprises a plurality of template attribute names and template attribute ranges respectively corresponding to the plurality of template attribute names, and the third attribute comprises a third attribute name and a third attribute range;
that the third attribute in the first intent expression does not accord with the intent template in the first device comprises:
the third attribute name is not comprised in the plurality of template attribute names in the intent template; or
the third attribute range exceeds a template attribute range that is in the intent template and that is corresponding to the third attribute; and
the failure information further comprises the third attribute.

24. The apparatus according to any one of claims 21 to 23, wherein the processing module is further configured to:
control the transceiver module to receive a recommended intent expression from the first device and send an indication of accepting the recommended intent expression to the first device, wherein the recommended intent expression is used to create the intent instance.

25. The apparatus according to any one of claims 21 to 23, wherein the processing module is further configured to:
control the transceiver module to modify the first intent expression based on the cause of the failure to obtain a second intent expression and send the second intent expression to the first device.

26. The apparatus according to any one of claims 21 to 25, wherein the first intent expression is comprised in an intent create request, the failure information is comprised in an intent create response, the intent create request further comprises a check indication, and the check indication is used to indicate the first device to perform a validity check on the first intent expression; or
the first intent expression is comprised in an intent validity check request, and the failure information is comprised in an intent validity check response.

27. A communication apparatus, comprising a processor, wherein the processor is connected to a memory, the memory is configured to store a computer program, and the processor is configured to execute the computer program stored in the memory, to enable the apparatus to perform the method according to any one of claims 1 to 7 or any one of claims 8 to 13.

28. A computer-readable storage medium, wherein the computer-readable storage medium stores a computer program or instructions, and when the computer program or the instructions are executed by a communication apparatus, the method according to any one of claims 1 to 7 or any one of claims 8 to 13 is implemented.

29. A computer program product, wherein the computer program product comprises a computer program or instructions, and when the computer program or the instructions are executed by a communication apparatus, the method according to any one of claims 1 to 7 or any one of claims 8 to 13 is implemented.
